# EUROPEAN PATENT APPLICATION

(11) **EP 4 775 970 A1**
(43) Date of publication of application: **15.07.2026**
(21) Application number: 24872466.8
(22) Date of filing: 27.09.2024
(51) Int. Cl.: G01N 23/2206, G01N 23/223

(54) **X-RAY ANALYSIS DEVICE, X-RAY ANALYSIS METHOD, INFORMATION PROCESSING DEVICE, AND COMPUTER PROGRAM**

(30) Priority: 29.09.2023 JP 2023170583
(71) Applicant: HORIBA, Ltd., Minami-ku Kyoto-shi Kyoto 601-8510 (JP)
(72) Inventor: AOYAMA, Tomoki, Kyoto-shi, Kyoto 601-8510 (JP)
(74) Representative: Isarpatent
(86) International application number: PCT/JP2024/034558
(87) International publication number: WO 2025/070683

(57) **Abstract**

There are provided an X-ray analysis device, an X-ray analysis method, an information processing device, and a computer program capable of individually measuring the amount of an element contained in a layer on a front surface side and a layer on a back surface side of a multilayer sample.

An X-ray analysis device includes an irradiation unit that irradiates a sample, in which a plurality of layers are laminated, with X-rays such that the X-rays transmit through a first layer, an intermediate layer, and a second layer in this order; a fluorescent X-ray detector that detects fluorescent X-rays generated from the first layer or the second layer; a transmission X-ray detector that detects transmitted X-rays transmitted through the sample; and an analysis unit. The analysis unit calculates an amount of a specific element contained in one of the first layer and the second layer according to an intensity of the fluorescent X-rays having a predetermined first energy, calculates a total amount of the specific element contained in the first layer and the second layer according to an intensity of the transmitted X-rays having a predetermined second energy higher than the first energy, and calculates an amount of the specific element contained in the other of the first layer and the second layer.

## Description

### Technical Field

The present invention relates to an x-ray analysis device, an x-ray analysis method, an information processing device, and a computer program.

### Background Art

It may be desirable to analyze a layer on a front surface side and a layer on a back surface side of a multilayer sample. For example, a fuel cell includes a multilayer membrane in which catalyst layers are bonded to both surfaces of an electrolyte layer that is a polymer membrane, and it may be desirable to measure the amount of a specific element contained in each of the catalyst layers. As a method for analyzing a multilayer sample, there is a method in which the multilayer sample is irradiated with X-rays, fluorescent X-rays generated from each layer are detected, and an analysis is performed based on the fluorescent X-rays. In addition, there is a method in which transmitted X-rays transmitted through the multilayer sample are detected and an analysis is performed based on the transmitted X-rays. Patent Literature 1 discloses a technique for measuring the thickness of a sample based on transmitted X-rays.

### Citation List

### Patent Literature:

Patent Literature 1: Japanese Patent Application Laid-Open No. H11-287643 Summary

### Technical Problems

In the method that uses the fluorescent X-rays, both the fluorescent X-rays generated from a layer located on the front surface side and the fluorescent X-rays generated from a layer located on the back surface side are detected at the same time, and the influence of the fluorescent X-rays from both layers needs to be taken into account. Since information about the transmitted X-rays represents a superimposition of information about a plurality of layers, even in the method that uses the transmitted X-rays, the influence of the plurality of layers needs to be taken into account. For this reason, it is not easy to individually measure the amount of an element contained in the layer on the front surface side and the layer on the back surface side of the multilayer sample.

The present invention has been made in view of such circumstances, and an object of the present invention is to provide an X-ray analysis device, an X-ray analysis method, an information processing device, and a computer program capable of individually measuring the amount of an element contained in a layer on a front surface side and a layer on a back surface side of a multilayer sample.

### Solution to Problems

An X-ray analysis device according to one aspect of the present invention is characterized by comprising: an irradiation unit that irradiates a sample, in which a plurality of layers are laminated and which includes a first layer, a second layer, and an intermediate layer located between the first layer and the second layer, with X-rays such that the X-rays transmit through the first layer, the intermediate layer, and the second layer in this order; a fluorescent X-ray detector that detects fluorescent X-rays generated from the first layer or the second layer; a transmission X-ray detector that detects transmitted X-rays transmitted through the sample; and an analysis unit, wherein the analysis unit calculates an amount of a specific element contained in one of the first layer and the second layer according to an intensity of the fluorescent X-rays having a predetermined first energy included in the fluorescent X-rays detected by the fluorescent X-ray detector, calculates a total amount of the specific element contained in the first layer and the second layer according to an intensity of the transmitted X-rays having a predetermined second energy higher than the first energy included in the transmitted X-rays detected by the transmission X-ray detector, and calculates an amount of the specific element contained in the other of the first layer and the second layer according to the amount of the specific element contained in the one of the first layer and the second layer and the total amount of the specific element contained in the first layer and the second layer.

In one aspect of the present invention, the X-ray analysis device irradiates the sample with the X-rays, the sample including the first layer, the intermediate layer, and the second layer, detects the fluorescent X-rays generated from the first layer, and detects the transmitted X-rays transmitted through the sample. Since the irradiation with the X-rays is performed such that the X-rays transmit through the first layer, the intermediate layer, and the second layer in this order, the first layer is located on the front surface side of the sample, and the second layer is located on the back surface side of the sample. The analysis unit calculates the amount of the specific element contained in one of the first layer and the second layer according to the intensity of the fluorescent X-rays having the first energy. The analysis unit calculates the total amount of the specific element contained in the first layer and the second layer according to the intensity of the transmitted X-rays having the second energy higher than the first energy. The analysis unit calculates the amount of the specific element contained in the other of the first layer and the second layer, based on the amount of the specific element contained in the one of the first layer and the second layer and the total amount of the specific element contained in the first layer and the second layer. In this way, the X-ray analysis device measures the amount of the specific element contained in each of the first layer and the second layer.

In the X-ray analysis device according to one aspect of the present invention, it is characterized in that the first energy is an energy of the fluorescent X-rays originating from a specific electron shell, and the second energy is an energy of an absorption edge originating from an electron shell immediately outside the specific electron shell.

In one aspect of the present invention, the first energy is the energy of the fluorescent X-rays generated when electrons contained in a specific electron shell are excited and transition to a ground state. The second energy is the energy at which X-ray absorption occurs due to the excitation of electrons contained in an electron shell immediately outside the specific electron shell. For this reason, the second energy becomes an energy higher than the first energy.

In the X-ray analysis device according to one aspect of the present invention, it is characterized in that the irradiation unit includes an X-ray generation unit that generates X-rays by causing accelerated electrons to collide with a target, and the X-ray generation unit determines a magnitude of a voltage for accelerating the electrons such that a maximum value of the energy of the generated X-rays becomes a predetermined third energy higher than the second energy.

In one aspect of the present invention, the X-ray analysis device irradiates the sample with the X-rays generated by causing accelerated electrons to collide with the target. The X-ray analysis device determines the magnitude of the voltage for accelerating the electrons such that the maximum value of the energy of the generated X-rays becomes the predetermined third energy higher than the energy of the transmitted X-rays used to calculate the amount of the specific element. By setting the third energy to an appropriate value, the intensity of the transmitted X-rays used to calculate the amount of the specific element is accurately obtained, and the amount of the specific element is accurately measured.

In the X-ray analysis device according to one aspect of the present invention, it is characterized in that the third energy is an energy higher than the second energy by 1 to 3 keV.

In one aspect of the present invention, the X-ray analysis device sets the third energy to an energy higher than the second energy by 1 to 3 keV. Accordingly, the transmitted X-rays used to calculate the amount of the specific element can be obtained, and the X-ray analysis device can measure the amount of platinum contained in each of the first layer and the second layer.

In the X-ray analysis device according to one aspect of the present invention, it is characterized in that the specific element is platinum or iridium, and the analysis unit calculates an amount of platinum or iridium contained in one of the first layer and the second layer according to an intensity of an M line of platinum or iridium included in the fluorescent X-rays detected by the fluorescent X-ray detector, and calculates a total amount of platinum or iridium contained in the first layer and the second layer according to an intensity of an L absorption edge of platinum or iridium included in the transmitted X-rays detected by the transmission X-ray detector.

In one aspect of the present invention, the specific element is platinum or iridium, and the analysis unit calculates the amount of platinum or iridium contained in one of the first layer and the second layer according to the intensity of the M line of platinum or iridium included in the fluorescent X-rays. In addition, the analysis unit calculates the total amount of platinum or iridium contained in the first layer and the second layer according to the intensity of the L absorption edge of platinum or iridium included in the transmitted X-rays. In this way, the X-ray analysis device measures the amount of platinum or iridium contained in each of the first layer and the second layer.

In the X-ray analysis device according to one aspect of the present invention, it is characterized in that the specific element is ruthenium, rhodium, or palladium, and the analysis unit calculates an amount of ruthenium, rhodium, or palladium contained in one of the first layer and the second layer according to an intensity of an L line of ruthenium, rhodium, or palladium included in the fluorescent X-rays detected by the fluorescent X-ray detector, and calculates a total amount of ruthenium, rhodium, or palladium contained in the first layer and the second layer according to an intensity of a K absorption edge of ruthenium, rhodium, or palladium included in the transmitted X-rays detected by the transmission X-ray detector.

In one aspect of the present invention, the specific element is ruthenium, rhodium, or palladium, and the analysis unit calculates the amount of ruthenium, rhodium, or palladium contained in one of the first layer and the second layer according to the intensity of the L line of ruthenium, rhodium, or palladium included in the fluorescent X-rays. In addition, the analysis unit calculates the total amount of ruthenium, rhodium, or palladium contained in the first layer and the second layer according to the intensity of the K absorption edge of ruthenium, rhodium, or palladium included in the transmitted X-rays. In this way, the X-ray analysis device measures the amount of ruthenium, rhodium, or palladium contained in each of the first layer and the second layer.

An X-ray analysis method according to one aspect of the present invention is characterized by comprising: irradiating a sample, in which a plurality of layers are laminated and which includes a first layer, a second layer, and an intermediate layer located between the first layer and the second layer, with X-rays such that the X-rays transmit through the first layer, the intermediate layer, and the second layer in this order; detecting fluorescent X-rays generated from the first layer or the second layer; detecting transmitted X-rays transmitted through the sample; calculating an amount of a specific element contained in one of the first layer and the second layer according to an intensity of the fluorescent X-rays having a predetermined first energy included in the detected fluorescent X-rays; calculating a total amount of the specific element contained in the first layer and the second layer according to an intensity of the transmitted X-rays having a predetermined second energy higher than the first energy included in the detected transmitted X-rays; and calculating an amount of the specific element contained in the other of the first layer and the second layer according to the amount of the specific element contained in the one of the first layer and the second layer and the total amount of the specific element contained in the first layer and the second layer.

In one aspect of the present invention, the sample including the first layer, the intermediate layer, and the second layer is irradiated with the X-rays, the fluorescent X-rays generated from the first layer are detected, and the transmitted X-rays transmitted through the sample are detected. The amount of the specific element contained in one of the first layer and the second layer is calculated according to the intensity of the fluorescent X-rays having the first energy. The total amount of the specific element contained in the first layer and the second layer is calculated according to the intensity of the transmitted X-rays having the second energy higher than the first energy. Next, the amount of the specific element contained in the other of the first layer and the second layer is calculated. In this way, the amount of the specific element contained in each of the first layer and the second layer is measured.

In the X-ray analysis method according to one aspect of the present invention, it is characterized in that the intermediate layer is a polymer membrane, and the first layer and the second layer are catalyst layers containing platinum, iridium, ruthenium, rhodium, or palladium.

In one aspect of the present invention, the intermediate layer is a polymer membrane, and the first layer and the second layer are catalyst layers containing platinum, iridium, ruthenium, rhodium, or palladium. For example, the sample can be incorporated into a fuel cell, the intermediate layer can function as an electrolyte membrane, and the first layer and the second layer can function as catalyst layers. The performance of the fuel cell can be estimated based on the measured amount of platinum, iridium, ruthenium, rhodium, or palladium.

An information processing device according to one aspect of the present invention is characterized by comprising: an arithmetic unit, wherein, when a sample in which a plurality of layers are laminated and which includes a first layer, a second layer, and an intermediate layer located between the first layer and the second layer is irradiated with X-rays such that the X-rays transmit through the first layer, the intermediate layer, and the second layer in this order, the arithmetic unit acquires a result of detecting fluorescent X-rays generated from the first layer or the second layer, and a result of detecting transmitted X-rays transmitted through the sample, calculates an amount of a specific element contained in one of the first layer and the second layer according to an intensity of the fluorescent X-rays having a predetermined first energy included in the detected fluorescent X-rays, calculates a total amount of the specific element contained in the first layer and the second layer according to an intensity of the transmitted X-rays having a predetermined second energy higher than the first energy included in the detected transmitted X-rays, and calculates an amount of the specific element contained in the other of the first layer and the second layer according to the amount of the specific element contained in the one of the first layer and the second layer and the total amount of the specific element contained in the first layer and the second layer.

A computer program according to one aspect of the present invention is characterized by causing a computer to execute processing of: calculating, based on a result of detecting fluorescent X-rays generated from a first layer or a second layer when a sample in which a plurality of layers are laminated and which includes the first layer, the second layer, and an intermediate layer located between the first layer and the second layer is irradiated with X-rays such that the X-rays transmit through the first layer, the intermediate layer, and the second layer in this order, an amount of a specific element contained in one of the first layer and the second layer according to an intensity of the fluorescent X-rays having a predetermined first energy included in the detected fluorescent X-rays; calculating, based on a result of detecting transmitted X-rays transmitted through the sample, a total amount of the specific element contained in the first layer and the second layer according to an intensity of the transmitted X-rays having a predetermined second energy higher than the first energy included in the detected transmitted X-rays; and calculating an amount of the specific element contained in the other of the first layer and the second layer according to the amount of the specific element contained in the one of the first layer and the second layer and the total amount of the specific element contained in the first layer and the second layer.

In one aspect of the present invention, the sample including the first layer, the intermediate layer, and the second layer is irradiated with the X-rays, and the amount of the specific element contained in one of the first layer and the second layer is calculated according to the intensity of the fluorescent X-rays having the first energy. The total amount of the specific element contained in the first layer and the second layer is calculated according to the intensity of the transmitted X-rays having the second energy higher than the first energy, and next, the amount of the specific element in the other of the first layer and the second layer is calculated. In this way, the amount of the specific element contained in each of the first layer and the second layer is measured.

### Advantageous Effects of Invention

The present invention provides excellent effects such as being able to individually measure the amount of a specific element contained in each of a layer on the front surface side and a layer on the back surface side of a multilayer sample.

### Brief Description of Drawings

FIG. 1 is a block diagram illustrating a functional configuration example of an X-ray analysis device.
FIG. 2 is a block diagram illustrating an example of an internal configuration of an analysis unit.
FIG. 3 is a schematic cross-sectional view of a sample.
FIG. 4 is a graph illustrating an example of a spectrum of fluorescent X-rays.
FIG. 5 is a graph illustrating an example of a spectrum of transmitted X-rays.
FIG. 6 is a flowchart illustrating an example of the procedure for processing executed by the X-ray analysis device.
FIG. 7 is a schematic view illustrating a configuration example of an irradiation unit.
FIG. 8 is a graph illustrating an example of a spectrum of transmitted X-rays obtained when a voltage applied by a voltage application unit is different from that in FIG. 5.
FIG. 9 is a graph illustrating an example of a spectrum of transmitted X-rays obtained when a voltage applied by the voltage application unit is different from that in FIG. 5.
FIG. 10 is a block diagram illustrating a functional configuration example of an X-ray analysis device according to another mode.

### Description of Embodiments

Hereinafter, the present invention will be specifically described with reference to the drawings illustrating embodiments of the present invention.

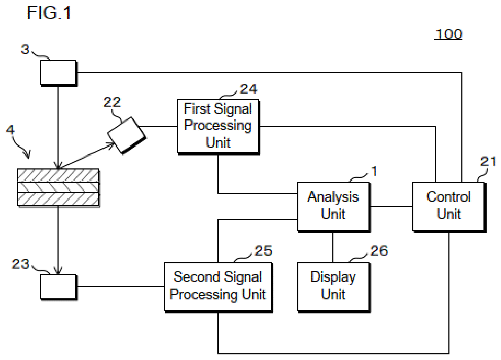

FIG. 1 is a block diagram illustrating a functional configuration example of an X-ray analysis device 100. The X-ray analysis device 100 includes an irradiation unit 3 that irradiates a sample 4 with X-rays; a fluorescent X-ray detector 22 that detects fluorescent X-rays generated from the sample 4 irradiated with the X-rays; and a transmission X-ray detector 23 that detects transmitted X-rays transmitted through the sample 4. The sample 4 is a multilayer sample including a plurality of laminated layers, and includes at least three layers. The X-ray analysis device 100 executes an X-ray analysis method for measuring the amount of a specific element contained in a first layer on the front surface side and a second layer on the back surface side of the sample 4. The irradiation unit 3 includes an X-ray generation unit that generates X-rays. The X-ray generation unit will be described later. In FIG. 1, the X-rays with which the sample 4 is irradiated, the fluorescent X-rays, and the transmitted X-rays are indicated by arrows.

The fluorescent X-ray detector 22 and the transmission X-ray detector 23 are radiation detectors, each including a radiation detection element configured using a semiconductor. For example, the fluorescent X-ray detector 22 and the transmission X-ray detector 23 are silicon drift detectors (SDDs). The fluorescent X-ray detector 22 is disposed so as to face the surface of the sample 4 that is irradiated with the X-rays. When the sample 4 is irradiated with the X-rays from the irradiation unit 3, fluorescent X-rays are generated in the sample 4. The fluorescent X-rays are radiated from the front surface of the sample 4, and are incident on the fluorescent X-ray detector 22. The fluorescent X-ray detector 22 detects the incident fluorescent X-rays, and outputs a signal having an intensity corresponding to the energy of the fluorescent X-rays.

The transmission X-ray detector 23 is disposed at a position facing the irradiation unit 3. The sample 4 is irradiated with the X-rays from the irradiation unit 3 in a state in which the sample 4 is disposed between the irradiation unit 3 and the transmission X-ray detector 23. A portion of the X-rays with which the sample 4 is irradiated from the irradiation unit 3 transmits through the sample 4. The X-rays transmitted through the sample 4 is referred to as transmitted X-rays. The transmitted X-rays are incident on the transmission X-ray detector 23. The transmission X-ray detector 23 detects the incident transmitted X-rays, and outputs a signal having an intensity corresponding to the energy of the transmitted X-rays.

A first signal processing unit 24 is connected to the fluorescent X-ray detector 22, and a second signal processing unit 25 is connected to the transmission X-ray detector 23. The first signal processing unit 24 and the second signal processing unit 25 are connected to an analysis unit 1. The analysis unit 1 is configured using a computer. A display unit 26 such as a liquid crystal display or an electroluminescent display (EL display) is connected to the analysis unit 1. The irradiation unit 3, the first signal processing unit 24, the second signal processing unit 25, and the analysis unit 1 are connected to a control unit 21.

The control unit 21 controls operations of the irradiation unit 3, the first signal processing unit 24, the second signal processing unit 25, and the analysis unit 1. The control unit 21 is configured using a computer including an arithmetic unit that executes calculations for controlling each part. The control unit 21 may be configured to receive an operation from a user and control each part of the X-ray analysis device 100 according to the received operation.

The fluorescent X-ray detector 22 outputs a signal having an intensity corresponding to the energy of the detected fluorescent X-rays, and the first signal processing unit 24 receives the signal output by the fluorescent X-ray detector 22. The first signal processing unit 24 detects a signal value corresponding to the energy of the fluorescent X-rays detected by the fluorescent X-ray detector 22, by detecting the intensity of the received signal. The first signal processing unit 24 counts signals for each signal value, and outputs data indicating the relationship between the signal value and the count number to the analysis unit 1.

The transmission X-ray detector 23 outputs a signal having an intensity corresponding to the energy of the detected transmitted X-rays, and the second signal processing unit 25 receives the signal output by the transmission X-ray detector 23. The second signal processing unit 25 detects a signal value corresponding to the energy of the transmitted X-rays detected by the transmission X-ray detector 23, by detecting the intensity of the received signal. The second signal processing unit 25 counts signals for each signal value, and outputs data indicating the relationship between the signal value and the count number to the analysis unit 1.

The analysis unit 1 receives the data indicating the relationship between the signal value and the count number that is output by the first signal processing unit 24. The analysis unit 1 generates a spectrum of the fluorescent X-rays detected by the fluorescent X-ray detector 22, based on the data from the first signal processing unit 24. The signal value corresponds to the energy of the fluorescent X-rays, and the count number corresponds to the number of times the fluorescent X-rays are detected, that is, the intensity of the fluorescent X-rays. For this reason, a spectrum of the fluorescent X-rays indicating the relationship between the energy and intensity of the fluorescent X-rays is obtained from the relationship between the signal value and the count number.

In addition, the analysis unit 1 receives the data indicating the relationship between the signal value and the count number that is output by the second signal processing unit 25. The analysis unit 1 generates a spectrum of the transmitted X-rays detected by the transmission X-ray detector 23, based on the data from the second signal processing unit 25. The signal value corresponds to the energy of the transmitted X-rays, and the count number corresponds to the number of times the transmitted X-rays are detected, that is, the intensity of the transmitted X-rays. For this reason, a spectrum of the transmitted X-rays indicating the relationship between the energy and intensity of the transmitted X-rays is obtained from the relationship between the signal value and the count number.

The process of counting the signals output by the fluorescent X-ray detector 22 and the transmission X-ray detector 23 for each signal value may be performed by the analysis unit 1, rather than by the first signal processing unit 24 and the second signal processing unit 25. The generation of a spectrum of the fluorescent X-rays may be performed by the first signal processing unit 24, and the generation of a spectrum of the transmitted X-rays may be performed by the second signal processing unit 25. The analysis unit 1 stores spectrum data representing the spectrum of the fluorescent X-rays and spectrum data representing the spectrum of the transmitted X-rays. The display unit 26 displays the spectrum of the fluorescent X-rays or the transmitted X-rays. A user can confirm the spectrum of the fluorescent X-rays from the sample 4 or the spectrum of the transmitted X-rays transmitted through the sample 4. In addition, the analysis unit 1 performs information processing based on the spectra of the fluorescent X-rays and the transmitted X-rays. In more detail, the analysis unit 1 performs information processing to measure the amount of the specific element contained in the first layer and the second layer of the sample 4. The analysis unit 1 corresponds to an information processing device that performs information processing for measuring the amount of the specific element.

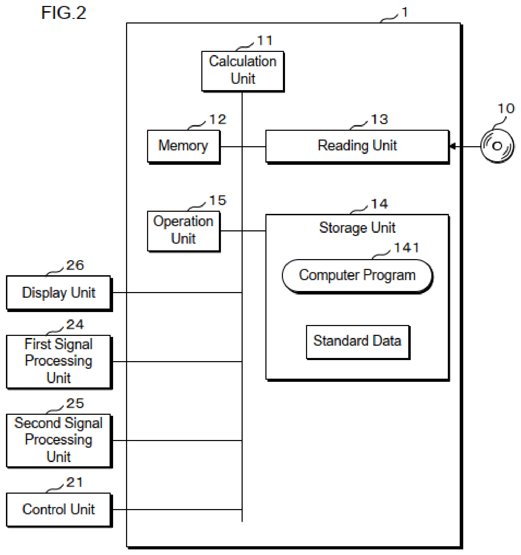

FIG. 2 is a block diagram illustrating an example of an internal configuration of the analysis unit 1. The analysis unit 1 is configured using a computer such as a personal computer. The analysis unit 1 includes an arithmetic unit 11, a memory 12, a reading unit 13, a storage unit 14, and an operation unit 15. The arithmetic unit 11 is configured using, for example, a central processing unit (CPU), a graphics processing unit (GPU), or a multi-core CPU. The arithmetic unit 11 may be configured using a quantum computer. The memory 12 stores temporary data generated incident to the calculations. The memory 12 is, for example, a random access memory (RAM).

The reading unit 13 reads information from a recording medium 10 such as an optical disk or a portable memory. The storage unit 14 is non-volatile, and is, for example, a hard disk or a non-volatile semiconductor memory. The operation unit 15 receives input of information such as text by receiving an operation from a user. The operation unit 15 is, for example, a touch panel, a keyboard, or a pointing device. The user input various instructions to the analysis unit 1 by operating the operation unit 15. The analysis unit 1 receives instructions input using the operation unit 15.

The arithmetic unit 11 causes the reading unit 13 to read a computer program 141 recorded on the recording medium 10, and causes the storage unit 14 to store the read computer program 141. The arithmetic unit 11 executes processing necessary for the analysis unit 1 in accordance with the computer program 141. Alternatively, the computer program 141 may be stored in advance in the storage unit 14 or downloaded from outside the analysis unit 1. In this case, the analysis unit 1 may not include the reading unit 13. The computer program 141 may be a program product.

The computer program 141 can be deployed to be executed on a single or on a plurality of computers disposed at one site or distributed across a plurality of sites and interconnected by a communication network. That is, the computer program 141 may be executed on a plurality of computers connected to each other via a communication network, and the analysis unit 1 may be composed of the plurality of computers connected to each other via the communication network. The analysis unit 1 may be configured using a cloud server.

The display unit 26, the first signal processing unit 24, the second signal processing unit 25, and the control unit 21 are connected to the analysis unit 1. The display unit 26 displays an image. The analysis unit 1 outputs information necessary for information processing by displaying an image including the information on the display unit 26. The analysis unit 1 receives signals from the first signal processing unit 24 and the second signal processing unit 25, and receives control signals from the control unit 21. Note that the analysis unit 1 and the control unit 21 may be configured as the same computer.

The storage unit 14 stores standard data in which the results of an X-ray analysis using a standard sample are recorded. For example, the standard data includes spectra of fluorescent X-rays and transmitted X-rays obtained from the standard sample. For example, the standard sample is a sample that uniformly contains the specific element at a specific concentration. For example, the standard data includes information indicating the position of a peak that is attributable to the specific element and that is included in the spectrum of the fluorescent X-rays, and information indicating the position of an absorption edge of the specific element included in the spectrum of the transmitted X-rays. The position of the peak and the position of the absorption edge are represented by the energy of X-rays. For example, the standard data includes the relationship between the amount of the specific element contained in the standard sample and both the intensity of the peak attributable to the specific element and the intensity of the absorption edge of the specific element. Note that the standard data may be stored in a storage device external to the analysis unit 1.

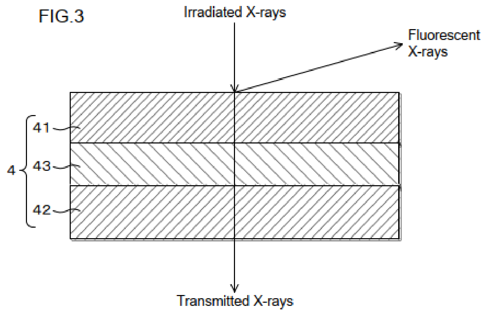

FIG. 3 is a schematic cross-sectional view of the sample 4. The sample 4 has a flat plate shape. The sample 4 is disposed such that one surface is irradiated with the X-rays from the irradiation unit 3. In FIG. 3, X-rays are indicated by an arrow, and the X-rays with which the sample 4 is irradiated from the irradiation unit 3 are referred to as irradiated X-rays. A surface irradiated with the X-rays from the irradiation unit 3 is referred to as the front surface of the sample 4, and a surface located on the back side of the front surface is referred to as the back surface of the sample 4. The sample 4 includes a first layer 41 including the front surface; a second layer 42 including the back surface; and an intermediate layer 43 located between the first layer 41 and the second layer 42. The first layer 41, the second layer 42, and the intermediate layer 43 are laminated. The intermediate layer 43 may be composed of a plurality of laminated layers. Note that the first layer 41 may not necessarily include the front surface, but merely needs to be located closer to the front surface side than the intermediate layer 43. Similarly, the second layer 42 may not necessarily include the back surface, but merely needs to be located closer to the back surface side than the intermediate layer 43. For example, the first layer 41 or the second layer 42 may be coated.

In the present embodiment, the intermediate layer 43 is a polymer membrane, and the first layer 41 and the second layer 42 are catalyst layers containing platinum. The sample 4 can be incorporated into a fuel cell, the intermediate layer 43 can function as an electrolyte membrane, and the platinum contained in the first layer 41 and the second layer 42 can function as a catalyst. For example, the sample 4 has a rectangular shape with each side having a length of several tens of cm in a plan view, and the thickness of each of the first layer 41, the second layer 42, and the intermediate layer 43 is several hundred µm. The platinum contained in the first layer 41 and the second layer 42 corresponds to the specific element. The X-ray analysis device 100 performs a process for measuring the amount of platinum contained in the first layer 41 and the second layer 42.

As illustrated in FIG. 3, the sample 4 is irradiated with the X-rays such that the X-rays transmit through the first layer 41, the intermediate layer 43, and the second layer 42 in this order. Fluorescent X-rays are generated from the first layer 41 irradiated with the X-rays. The fluorescent X-rays detected by the fluorescent X-ray detector 22 are mainly the fluorescent X-rays generated from the first layer 41. The fluorescent X-rays generated from the second layer 42 are absorbed and attenuated by the intermediate layer 43 and the first layer 41.

A first energy is defined as the energy of fluorescent X-rays originating from a specific electron shell of the specific element. The fluorescent X-rays originating from the specific electron shell are fluorescent X-rays generated when electrons contained in the specific electron shell are excited and the excited electrons transition to a ground state. In addition, it is assumed that the X-rays having the first energy do not transmit through the intermediate layer 43. A second energy is defined as the energy of an absorption edge originating from an electron shell immediately outside the above-described specific electron shell. The second energy is an energy at which a sharp X-ray absorption occurs due to the excitation of electrons contained in the electron shell immediately outside the above-described specific electron shell. The second energy is higher than the first energy. In addition, it is assumed that the X-rays having the second energy transmit through the intermediate layer 43.

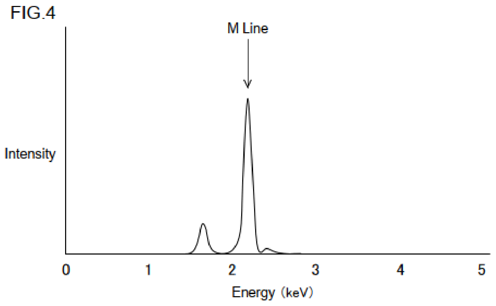

FIG. 4 is a graph illustrating an example of a spectrum of fluorescent X-rays. In FIG. 4, the horizontal axis represents the energy of the fluorescent X-rays, and the vertical axis is a linear scale and represents the intensity of the fluorescent X-rays. For example, the intensity of X-rays is expressed as a count number per unit time. FIG. 4 illustrates the peak of the M line of platinum. The energy of the M line of platinum is defined as the first energy. The energy of the M line of platinum is approximately 2 keV. The fluorescent X-rays having the first energy do not transmit through the intermediate layer 43. The fluorescent X-rays having the first energy are also generated in the second layer 42; however, since the fluorescent X-rays do not transmit through the intermediate layer 43, the fluorescent X-rays are not detected by the fluorescent X-ray detector 22. Therefore, the peak of the M line of platinum included in the spectrum of the fluorescent X-rays is attributable to the platinum contained in the first layer 41, and the intensity of the peak is related to the amount of platinum contained in the first layer 41.

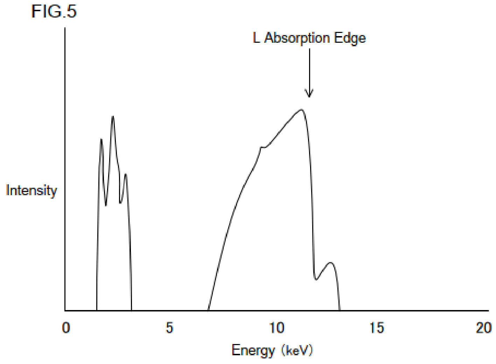

FIG. 5 is a graph illustrating an example of a spectrum of transmitted X-rays. In FIG. 5, the horizontal axis represents the energy of the transmitted X-rays, and the vertical axis is a logarithmic scale and represents the intensity of the transmitted X-rays. FIG. 5 illustrates the L absorption edge of platinum. The energy of the L absorption edge of platinum is defined as the second energy. Strictly speaking, a plurality of the L absorption edges exist; however, the energy of any one of the L absorption edges is defined as the second energy. For example, among the plurality of L absorption edges included in the spectrum of the transmitted X-rays, the energy of the L absorption edge having a maximum intensity is defined as the second energy. For example, the LIIIab absorption edge is defined as the L absorption edge used in a process for calculating the amount of platinum. The energy of the LIIIab absorption edge of platinum is 11.56 keV. The transmitted X-rays having the second energy transmit through the intermediate layer 43. That is, the transmitted X-rays that bring about the L absorption edge of platinum transmit through the intermediate layer 43, and are attributable to the platinum contained in the first layer 41 and the second layer 42. Therefore, the intensity of the L absorption edge of platinum included in the spectrum of the transmitted X-rays, is related to the total amount of platinum contained in the first layer 41 and the second layer 42.

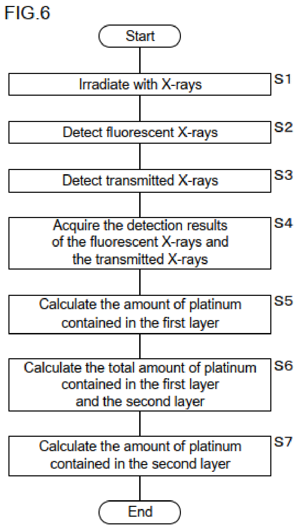

FIG. 6 is a flowchart illustrating an example of the procedure for processing executed by the X-ray analysis device 100. Hereinafter, step will be abbreviated as S. The analysis unit 1 executes processing by the arithmetic unit 11 executing information processing in accordance with the computer program 141. The irradiation unit 3 generates X-rays, and irradiates the sample 4 with the X-rays (S1). In S1, the control unit 21 causes the irradiation unit 3 to generate X-rays. The sample 4 is held in the X-ray analysis device 100 such that the X-rays transmit through the first layer 41, the intermediate layer 43, and the second layer 42 in this order. Fluorescent X-rays are generated from the first layer 41 by the irradiation with the X-rays. The fluorescent X-ray detector 22 detects the fluorescent X-rays (S2). The transmission X-ray detector 23 detects transmitted X-rays transmitted through the sample 4 (S3).

The fluorescent X-ray detector 22 outputs a signal having an intensity corresponding to the energy of the fluorescent X-rays to the first signal processing unit 24, and the first signal processing unit 24 counts signals for each signal value, and outputs data indicating the relationship between the signal value and the count number to the analysis unit 1. The transmission X-ray detector 23 outputs a signal having an intensity corresponding to the energy of the transmitted X-rays to the second signal processing unit 25, and the second signal processing unit 25 counts signals for each signal value, and outputs data indicating the relationship between the signal value and the count number to the analysis unit 1. The analysis unit 1 acquires the detection results of the fluorescent X-rays and the transmitted X-rays by receiving the data from the first signal processing unit 24 and the second signal processing unit 25 (S4). The arithmetic unit 11 generates spectra of the fluorescent X-rays and the transmitted X-rays, and stores the data of the spectra in the storage unit 14.

The analysis unit 1 calculates the amount of platinum contained in the first layer 41, based on the spectrum of the fluorescent X-rays (S5). In S5, the arithmetic unit 11 acquires the intensity of the peak of the M line of platinum included in the spectrum of the fluorescent X-rays, and calculates the amount of platinum contained in the first layer 41 according to the intensity of the peak of the M line of platinum. The arithmetic unit 11 performs the calculation using the standard data. For example, the arithmetic unit 11 compares the intensity of the peak of the M line of platinum corresponding to the specific amount of platinum recorded in the standard data with the acquired intensity of the peak of the M-line of platinum, and calculates the amount of platinum contained in the first layer 41 by interpolating the amount of platinum according to the difference in intensity. In this case, the arithmetic unit 11 may calculate the amount of platinum per unit area as the amount of platinum, or may calculate the total amount of platinum contained in the entirety of the first layer 41 according to the area and thickness of the first layer 41. The arithmetic unit 11 stores the calculated amount of platinum contained in the first layer 41 in the storage unit 14.

The analysis unit 1 calculates the total amount of platinum contained in the first layer 41 and the second layer 42, based on the spectrum of the transmitted X-rays (S6). In S6, the arithmetic unit 11 calculates the intensity of the L absorption edge of platinum included in the spectrum of the transmitted X-rays. For example, the arithmetic unit 11 acquires the intensities of two signals located before and after the L absorption edge of platinum in the spectrum of the transmitted X-rays, and calculates the intensity of the L absorption edge of platinum by calculating the difference between the acquired intensities of the two signals. The arithmetic unit 11 calculates the total amount of platinum contained in the first layer 41 and the second layer 42 according to the intensity of the L absorption edge of platinum.

The arithmetic unit 11 performs the calculation using the standard data. For example, the arithmetic unit 11 compares the intensity of the L absorption edge of platinum corresponding to the specific amount of platinum recorded in the standard data with the acquired intensity of the L absorption edge of platinum, and calculates the total amount of platinum contained in the first layer 41 and the second layer 42 by interpolating the amount of platinum according to the difference in intensity. In this case, the arithmetic unit 11 may calculate the amount of platinum per unit area, or may calculate the total amount of platinum contained in the first layer 41 and the second layer 42. The arithmetic unit 11 stores the calculated total amount of platinum contained in the first layer 41 and the second layer 42 in the storage unit 14.

The analysis unit 1 calculates the amount of platinum contained in the second layer 42 (S7). In S7, the arithmetic unit 11 calculates the amount of platinum contained in the second layer 42 by subtracting the amount of platinum contained in the first layer 41 from the total amount of platinum contained in the first layer 41 and the second layer 42. The arithmetic unit 11 stores the calculated amount of platinum contained in the second layer 42 in the storage unit 14. The arithmetic unit 11 may display the calculated amount of platinum contained in each of the first layer 41 and the second layer 42 on the display unit 26. After S7 has ended, the analysis unit 1 ends the processing.

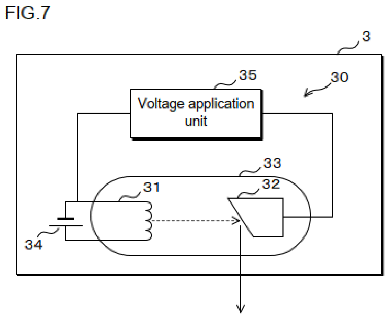

Next, the X-rays with which the irradiation unit 3 irradiates the sample 4 will be described. FIG. 7 is a schematic view illustrating a configuration example of the irradiation unit 3. The irradiation unit 3 includes an X-ray generation unit 30 that generates X-rays. The X-ray generation unit 30 is an X-ray tube. The X-ray generation unit 30 includes a filament 31, a target 32, a sealed tube 33, a power supply 34, and a voltage application unit 35. The sealed tube 33 is transparent, and is sealed in a state in which the filament 31 and the target 32 are housed inside. The filament 31 and the target 32 face each other. The power supply 34 is connected to the filament 31.

A current from the power supply 34 flows to the filament 31, the filament 31 generates heat, and electrons are generated from the filament 31 due to the heat. The voltage application unit 35 applies a voltage for accelerating the electrons, which are generated from the filament 31, toward the target 32 between the filament 31 and the target 32. The material of the target 32 is, for example, copper. The electrons generated from the filament 31 are accelerated by the voltage and collide with the target 32, and X-rays are generated from the target 32. In FIG. 7, the trajectory of the electrons is indicated by a dashed arrow, and the X-rays are indicated by a solid arrow.

The irradiation unit 3 irradiates the sample 4 with the X-rays generated by the X-ray generation unit 30. The energy range of the X-rays with which the sample 4 is irradiated depends on the voltage applied by the voltage application unit 35. For example, when it is assumed that A is an arbitrary positive value and the magnitude of the voltage applied by the voltage application unit 35 is A kV, the energy of the X-rays with which the sample 4 is irradiated is continuously distributed in a range of A keV or less. The X-ray generation unit 30 determines the magnitude of the voltage applied by the voltage application unit 35. For example, the magnitude of the voltage applied by the voltage application unit 35 is fixed in advance. For example, the voltage application unit 35 is connected to the control unit 21, and the control unit 21 controls the magnitude of the voltage applied by the voltage application unit 35.

The energy ranges of the fluorescent X-rays and the transmitted X-rays depend on the energy range of the X-rays with which the sample 4 is irradiated. In order to obtain the fluorescent X-rays and the transmitted X-rays, irradiation with X-rays having higher energy is required. That is, in order to observe a peak included in the spectrum of the fluorescent X-rays or an absorption edge included in the spectrum of the transmitted X-rays, irradiation with X-rays having energy higher than the energy of the peak or the absorption edge is required. In the present embodiment, irradiation with X-rays having energy higher than the second energy is required.

The transmitted X-rays detected by the transmission X-ray detector 23 include fluorescent X-rays. For this reason, the spectrum of the transmitted X-rays includes the peak of the fluorescent X-rays. In the spectrum of the transmitted X-rays, the peak of the L line of the fluorescent X-rays of platinum appears at a position near the L absorption edge of platinum, and the peak of the L line affects the intensity of the L absorption edge. The energy of the peak of the L line of platinum is slightly lower than the energy of the L absorption edge of platinum. The more the sample 4 is irradiated with X-rays having energy higher than that of the peak and the absorption edge of the fluorescent X-rays, the greater the intensity of the peak and the intensity of the absorption edge of the fluorescent X-rays become. The higher the maximum value of the energy of the X-rays with which the sample 4 is irradiated becomes, the greater the intensity of the X-rays having the respective energies becomes.

In order to accurately calculate the intensity of the L absorption edge of platinum, it is desirable that the sample 4 is irradiated with X-rays having energy higher than that of the L absorption edge with a sufficiently large intensity, and that the intensity of the L absorption edge becomes sufficiently large. For this purpose, the maximum value of the energy of the X-rays with which the sample 4 is irradiated needs to be higher than the second energy that is the energy of the L absorption edge of platinum, and the sample 4 needs to be irradiated with X-rays having energy higher than the second energy with a sufficiently large intensity. However, when the intensity of the X-rays having energy higher than the second energy is large, the intensity of the L line of the fluorescent X-rays of platinum also becomes large, and affects the intensity of the L absorption edge. For this reason, it is desirable that the intensity of the X-rays having energy higher than the second energy is not too large, and it is desirable that the maximum value of the energy of the X-rays with which the sample 4 is irradiated is not too high.

The maximum value of the energy of the X-rays with which the sample 4 is irradiated is defined as a third energy. That is, the maximum value of the energy of X-rays generated by the X-ray generation unit 30 is the third energy. In the present embodiment, the third energy is higher than the second energy. In addition, the third energy is set to a value such that the intensity of the L line of the fluorescent X-rays of platinum does not become too large. The magnitude of the voltage applied to the filament 31 and the target 32 by the voltage application unit 35 is determined to a predetermined value, thereby determining the third energy.

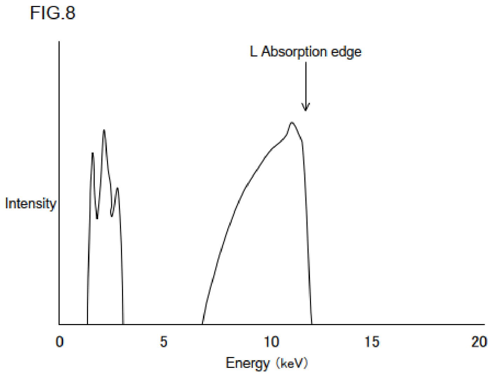

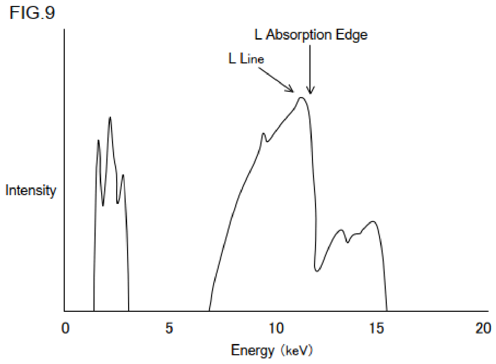

FIGS 8 and 9 are graphs illustrating examples of a spectrum of transmitted X-rays obtained when a voltage applied by the voltage application unit 35 is different from that in FIG. 5. In FIGS. 8 and 9, the horizontal axis represents the energy of the transmitted X-rays, and the vertical axis is a logarithmic scale and represents the intensity of the transmitted X-rays. FIG. 8 illustrates an example in which the magnitude of the voltage applied by the voltage application unit 35 is 12 kV, FIG. 5 illustrates an example in which the magnitude of the voltage applied by the voltage application unit 35 is 13 kV, and FIG. 9 illustrates an example in which the magnitude of the voltage applied by the voltage application unit 35 is 15 kV. That is, the third energy is 12 keV in the example illustrated in FIG. 8, the third energy is 13 keV in the example illustrated in FIG. 5, and the third energy is 15 keV in the example illustrated in FIG. 9.

As illustrated in FIGS. 5, 8, and 9, the spectrum of the transmitted X-rays includes the L absorption edge of platinum. The absorption edge in the figures is the LIIIab absorption edge, and the energy of the L absorption edge is 11.56 keV. Since the spectrum of the transmitted X-rays includes the L absorption edge of platinum, the X-ray analysis device 100 can execute the processing of S1 to S7 to measure the amount of platinum contained in the first layer 41 and the second layer 42 of the sample 4. It is desirable that the third energy is an appropriate value such that the intensity of the L absorption edge is accurately obtained and the intensity of the L line of the fluorescent X-rays becomes sufficiently small.

As illustrated in FIG. 8, when the third energy is 12 keV, many signals having energy higher than that of the L absorption edge of platinum are not included in the transmission spectrum. For this reason, the intensity of the L absorption edge becomes relatively inaccurate. In this way, when the difference between the third energy and the second energy is less than 1 keV, the intensity of the L absorption edge becomes inaccurate, and therefore, it is desirable that the difference between the third energy and the second energy is 1 keV or more. In addition, as illustrated in FIG. 9, when the third energy is 15 keV, the intensity of the L line of the fluorescent X-rays of platinum becomes large, and the influence of the L line on the intensity of the L absorption edge becomes large. For this reason, the intensity of the L absorption edge becomes relatively inaccurate. In this way, even when the difference between the third energy and the second energy exceeds 3 keV, the intensity of the L absorption edge becomes inaccurate, and therefore, it is desirable that the difference between the third energy and the second energy is 3 keV or less. Therefore, it is desirable that the third energy is an energy higher than the second energy by 1 to 3 keV.

As illustrated in FIG. 5, when the third energy is 13 keV, signals having energy higher than that of the L absorption edge of platinum are sufficiently included in the transmission spectrum. In addition, the intensity of the L line of the fluorescent X-rays of platinum is sufficiently small, and the influence of the L line on the intensity of the L absorption edge is small. For this reason, when the third energy is an energy higher than the second energy by 1 to 3 keV, the analysis unit 1 can more accurately calculate the intensity of the L absorption edge, so that the amount of platinum contained in the first layer 41 and the second layer 42 of the sample 4 can be more accurately calculated. The magnitude of the voltage applied by the voltage application unit 35 is determined such that the third energy becomes an energy higher than the second energy by 1 to 3 keV. For example, when the third energy is 13 keV, the magnitude of the voltage is 13 kV. The X-ray analysis device 100 can accurately measure the amount of platinum contained in the first layer 41 and the second layer 42 of the sample 4 by appropriately determining the magnitude of the voltage applied by the voltage application unit 35 such that the third energy becomes an appropriate value.

As described above, in the present embodiment, the X-ray analysis device 100 irradiates the sample 4 with the X-rays, detects the fluorescent X-rays generated from the first layer 41, and detects the transmitted X-rays transmitted through the sample 4. The analysis unit 1 calculates the amount of platinum contained in the first layer 41 according to the intensity of the fluorescent X-rays that do not transmit through the intermediate layer 43. The analysis unit 1 calculates the total amount of platinum contained in the first layer 41 and the second layer 42 according to the intensity of the fluorescent X-rays that transmit through the intermediate layer 43. The analysis unit 1 calculates the amount of platinum contained in the second layer 42 from the amount of platinum contained in the first layer 41 and the total amount of platinum contained in the first layer 41 and the second layer 42. Accordingly, the X-ray analysis device 100 can individually measure the amount of platinum contained in each of the first layer 41 and the second layer 42 included in the multilayer sample 4.

For example, the sample 4 can be incorporated into a fuel cell, the intermediate layer 43 can function as an electrolyte membrane, and the first layer 41 and the second layer 42 can function as catalyst layers. The X-ray analysis device 100 can individually measure the amount of platinum contained in each catalyst layer. The performance of the fuel cell can be estimated based on the measured amount of platinum.

In the above description, a mode in which the amount of platinum contained in the first layer 41 and the second layer 42 is measured has been illustrated; however, the X-ray analysis device 100 may employ a mode in which the amount of an element other than platinum is measured. For example, the first layer 41 and the second layer 42 contain iridium as a specific element, and the X-ray analysis device 100 measures the amount of iridium contained in the first layer 41 and the second layer 42. Similarly to platinum, iridium can be used as a catalyst. In S5, the analysis unit 1 calculates the amount of iridium contained in the first layer 41 according to the intensity of the peak of the M line of iridium included in the spectrum of the fluorescent X-rays. In S6, the analysis unit 1 calculates the total amount of iridium contained in the first layer 41 and the second layer 42 according to the intensity of the L absorption edge of iridium included in the spectrum of the transmitted X-rays. In S7, the analysis unit 1 calculates the amount of iridium contained in the second layer 42. In this way, through the processing of S1 to S7, the X-ray analysis device 100 measures the amount of iridium contained in the first layer 41 and the second layer 42. The performance of the fuel cell can be estimated based on the measured amount of iridium.

The first layer 41 and the second layer 42 may contain ruthenium, rhodium, or palladium as a specific element, and the X-ray analysis device 100 may measure the amount of ruthenium, rhodium, or palladium contained in the first layer 41 and the second layer 42. Ruthenium, rhodium, or palladium can also be used as a catalyst. When the specific element is ruthenium, rhodium, or palladium, the energy of the L line of ruthenium, rhodium, or palladium included in the spectrum of the fluorescent X-rays is defined as the first energy. Strictly speaking, a plurality of the L lines exist; however, the energy of any one of the L lines is defined as the first energy. For example, the energy of the L line having a maximum intensity among the plurality of L lines is defined as the first energy. For example, the Lα line is defined as the L line used in a process for calculating the amount of ruthenium, rhodium, or palladium. The energies of the Lα lines of ruthenium, rhodium, and palladium are 2.558 keV, 2.696 keV, and 2.838 keV, respectively. The fluorescent X-rays having the first energy do not transmit through the intermediate layer 43.

When the specific element is ruthenium, rhodium, or palladium, the energy of the K absorption edge included in the spectrum of the transmitted X-rays is defined as the second energy. The energies of the K absorption edges of ruthenium, rhodium, and palladium are 22.116 keV, 23.216 keV, and 24.344 keV, respectively. The fluorescent X-rays having the second energy transmit through the intermediate layer 43.

In S5, the analysis unit 1 calculates the amount of ruthenium, rhodium, or palladium contained in the first layer 41 according to the intensity of the peak of the L line of ruthenium, rhodium, or palladium included in the spectrum of the fluorescent X-rays. In S6, the analysis unit 1 calculates the total amount of ruthenium, rhodium, or palladium contained in the first layer 41 and the second layer 42 according to the intensity of the K absorption edge of ruthenium, rhodium, or palladium included in the spectrum of the transmitted X-rays. In S7, the analysis unit 1 calculates the amount of ruthenium, rhodium, or palladium contained in the second layer 42. In this way, through the processing of S1 to S7, the X-ray analysis device 100 measures the amount of ruthenium, rhodium, or palladium contained in the first layer 41 and the second layer 42. The performance of the fuel cell can be estimated based on the measured amount of ruthenium, rhodium, or palladium.

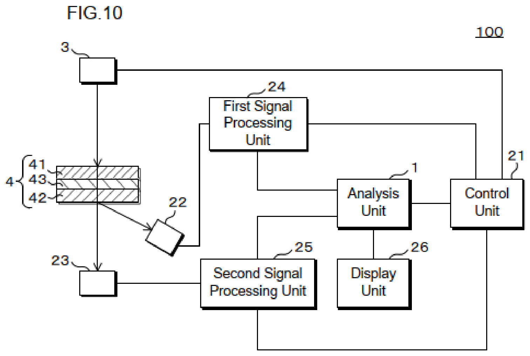

In the present embodiment, a mode in which the fluorescent X-rays generated from the first layer 41 are detected has been illustrated; however, the X-ray analysis device 100 may employ a mode in which the fluorescent X-rays generated from the second layer 42 are detected. FIG. 10 is a block diagram illustrating a functional configuration example of the X-ray analysis device 100 according to another mode. The fluorescent X-ray detector 22 is disposed so as to face the back surface of the sample 4. The configuration of the other portions of the X-ray analysis device 100 is the same. In this mode, in S2, the fluorescent X-ray detector 22 detects the fluorescent X-rays generated from the second layer 42. In S5, the analysis unit 1 calculates the amount of a specific element contained in the second layer 42. In S7, the analysis unit 1 calculates the amount of the specific element contained in the first layer 41 from the amount of the specific element contained in the second layer 42 and the total amount of the specific element contained in the first layer 41 and the second layer 42. In this mode as well, the X-ray analysis device 100 can individually measure the amount of the specific element contained in each of the first layer 41 and the second layer 42.

The X-ray analysis device 100 may employ a mode in which the fluorescent X-ray detector 22 and the transmission X-ray detector 23 are configured as a common detector. Since the transmission X-ray detector 23 detects the fluorescent X-rays generated from the second layer 42, in this mode, the X-ray analysis device 100 does not include the fluorescent X-ray detector 22 and the first signal processing unit 24, and the transmission X-ray detector 23 also serves the fluorescent X-ray detector 22. In this mode, the X-ray analysis device 100 does not perform the processing of S2. In S5, the analysis unit 1 acquires the intensity of the peak of the fluorescent X-rays having the first energy included in the spectrum of the transmitted X-rays, and calculates the amount of a specific element contained in the second layer 42 according to the acquired intensity. In S7, the analysis unit 1 calculates the amount of the specific element contained in the first layer 41 from the amount of the specific element contained in the second layer 42 and the total amount of the specific element contained in the first layer 41 and the second layer 42. In this way, in this mode as well, the X-ray analysis device 100 can individually measure the amount of the specific element contained in each of the first layer 41 and the second layer 42.

The X-ray analysis device 100 may employ a mode in which the fluorescent X-rays generated from the first layer 41 and the fluorescent X-rays generated from the second layer 42 are individually detected. In this mode, the X-ray analysis device 100 includes two fluorescent X-ray detectors 22, one fluorescent X-ray detector 22 detects the fluorescent X-rays generated from the first layer 41, and the other fluorescent X-ray detector 22 detects the fluorescent X-rays generated from the second layer 42. In this mode as well, the transmission X-ray detector 23 may also serve as the fluorescent X-ray detector 22 that detects the fluorescent X-rays generated from the second layer 42.

In this mode, in S2, the X-ray analysis device 100 individually detects the fluorescent X-rays generated from each of the first layer 41 and the second layer 42. In S5 to S7, the analysis unit 1 calculates the amount of a specific element contained in each of the first layer 41 and the second layer 42 using the detected intensity of the fluorescent X-rays generated from each of the first layer 41 and the second layer 42 and the detected intensity of the transmitted X-rays. For example, the analysis unit 1 calculates the ratio of the amounts of the specific element contained in the first layer 41 and the second layer 42, based on the detected intensity of the fluorescent X-rays generated from each of the first layer 41 and the second layer 42. In addition, the analysis unit 1 calculates the amount of the specific element contained in each of the first layer 41 and the second layer 42 from the total amount of the specific element contained in the first layer 41 and the second layer 42 and the ratio of the amounts of the specific element. In this way, in this mode as well, the X-ray analysis device 100 can individually measure the amount of the specific element contained in each of the first layer 41 and the second layer 42.

In the present embodiment, a mode in which the fluorescent X-ray detector 22 and the transmission X-ray detector 23 are radiation detectors, each including a radiation detection element configured using a semiconductor, has been illustrated. The fluorescent X-ray detector 22 and the transmission X-ray detector 23 may be radiation detectors, each including a radiation detection element other than the radiation detection element configured using a semiconductor. The fluorescent X-ray detector 22 and the transmission X-ray detector 23 are not limited to energy dispersive detectors, but may be any detectors capable of detecting the intensity of X-rays having a specific energy. In the present embodiment, an example in which the horizontal axis of the spectrum of X-rays represents energy has been illustrated; however, the X-ray analysis device 100 may employ a mode in which a spectrum using a value other than energy, such as wavelength or wavenumber, on the horizontal axis is handled.

The present invention is not limited to the contents of the embodiments described above, and various modifications can be made without departing from the scope of the claims. That is, embodiments obtained by combining technical means that are appropriately modified within the scope of the claims are also included in the technical scope of the present invention.

The features described in each of the embodiments can be mutually combined. In addition, the independent claims and the dependent claims described in the claims can be mutually combined in all possible combinations, regardless of the citation format. Furthermore, a format in which a claim refers to two or more other claims (multi-claim format) is used in the claims; however, the present invention is not limited thereto. The claims may be described using a format in which a multi-claim (multi-multi claim) referring to at least one multi-claim is described.

### Reference Signs List

100...X-ray analysis device
1... analysis unit (information processing device)
10...recording medium
11... arithmetic unit
14...storage unit
141...computer program
22... fluorescent X-ray detector
23... transmission X-ray detector
3...irradiation unit
30...X-ray generation unit
31...filament
32...target
35...voltage application unit
4...sample
41...first layer
42... second layer
43...intermediate layer

## Claims

1. An X-ray analysis device, **characterized by** comprising:
an irradiation unit that irradiates a sample, in which a plurality of layers are laminated and which includes a first layer, a second layer, and an intermediate layer located between the first layer and the second layer, with X-rays such that the X-rays transmit through the first layer, the intermediate layer, and the second layer in this order;
a fluorescent X-ray detector that detects fluorescent X-rays generated from the first layer or the second layer;
a transmission X-ray detector that detects transmitted X-rays transmitted through the sample; and
an analysis unit,
wherein the analysis unit calculates an amount of a specific element contained in one of the first layer and the second layer according to an intensity of the fluorescent X-rays having a predetermined first energy included in the fluorescent X-rays detected by the fluorescent X-ray detector, calculates a total amount of the specific element contained in the first layer and the second layer according to an intensity of the transmitted X-rays having a predetermined second energy higher than the first energy included in the transmitted X-rays detected by the transmission X-ray detector, and calculates an amount of the specific element contained in the other of the first layer and the second layer according to the amount of the specific element contained in the one of the first layer and the second layer and the total amount of the specific element contained in the first layer and the second layer.

2. The X-ray analysis device according to claim 1, **characterized in that**
the first energy is an energy of the fluorescent X-rays originating from a specific electron shell, and
the second energy is an energy of an absorption edge originating from an electron shell immediately outside the specific electron shell.

3. The X-ray analysis device according to claim 1 or 2, **characterized in that**
the irradiation unit includes an X-ray generation unit that generates X-rays by causing accelerated electrons to collide with a target, and
the X-ray generation unit determines a magnitude of a voltage for accelerating the electrons such that a maximum value of the energy of the generated X-rays becomes a predetermined third energy higher than the second energy.

4. The X-ray analysis device according to claim 3, **characterized in that**
the third energy is an energy higher than the second energy by 1 to 3 keV.

5. The X-ray analysis device according to any one of claims 1 to 4, **characterized in that**
the specific element is platinum or iridium, and
the analysis unit calculates an amount of platinum or iridium contained in one of the first layer and the second layer according to an intensity of an M line of platinum or iridium included in the fluorescent X-rays detected by the fluorescent X-ray detector, and calculates a total amount of platinum or iridium contained in the first layer and the second layer according to an intensity of an L absorption edge of platinum or iridium included in the transmitted X-rays detected by the transmission X-ray detector.

6. The X-ray analysis device according to any one of claims 1 to 4, **characterized in that**
the specific element is ruthenium, rhodium, or palladium, and
the analysis unit calculates an amount of ruthenium, rhodium, or palladium contained in one of the first layer and the second layer according to an intensity of an L line of ruthenium, rhodium, or palladium included in the fluorescent X-rays detected by the fluorescent X-ray detector, and calculates a total amount of ruthenium, rhodium, or palladium contained in the first layer and the second layer according to an intensity of a K absorption edge of ruthenium, rhodium, or palladium included in the transmitted X-rays detected by the transmission X-ray detector.

7. An X-ray analysis method, **characterized by** comprising:
irradiating a sample, in which a plurality of layers are laminated and which includes a first layer, a second layer, and an intermediate layer located between the first layer and the second layer, with X-rays such that the X-rays transmit through the first layer, the intermediate layer, and the second layer in this order;
detecting fluorescent X-rays generated from the first layer or the second layer;
detecting transmitted X-rays transmitted through the sample;
calculating an amount of a specific element contained in one of the first layer and the second layer according to an intensity of the fluorescent X-rays having a predetermined first energy included in the detected fluorescent X-rays;
calculating a total amount of the specific element contained in the first layer and the second layer according to an intensity of the transmitted X-rays having a predetermined second energy higher than the first energy included in the detected transmitted X-rays; and
calculating an amount of the specific element contained in the other of the first layer and the second layer according to the amount of the specific element contained in the one of the first layer and the second layer and the total amount of the specific element contained in the first layer and the second layer.

8. The X-ray analysis method according to claim 7, **characterized in that**
the intermediate layer is a polymer membrane, and
the first layer and the second layer are catalyst layers containing platinum, iridium, ruthenium, rhodium, or palladium.

9. An information processing device, **characterized by** comprising:
an arithmetic unit,
wherein, when a sample in which a plurality of layers are laminated and which includes a first layer, a second layer, and an intermediate layer located between the first layer and the second layer is irradiated with X-rays such that the X-rays transmit through the first layer, the intermediate layer, and the second layer in this order, the arithmetic unit acquires a result of detecting fluorescent X-rays generated from the first layer or the second layer, and a result of detecting transmitted X-rays transmitted through the sample, calculates an amount of a specific element contained in one of the first layer and the second layer according to an intensity of the fluorescent X-rays having a predetermined first energy included in the detected fluorescent X-rays, calculates a total amount of the specific element contained in the first layer and the second layer according to an intensity of the transmitted X-rays having a predetermined second energy higher than the first energy included in the detected transmitted X-rays, and calculates an amount of the specific element contained in the other of the first layer and the second layer according to the amount of the specific element contained in the one of the first layer and the second layer and the total amount of the specific element contained in the first layer and the second layer.

10. A computer program, **characterized by** causing a computer to execute processing of:
calculating, based on a result of detecting fluorescent X-rays generated from a first layer or a second layer when a sample in which a plurality of layers are laminated and which includes the first layer, the second layer, and an intermediate layer located between the first layer and the second layer is irradiated with X-rays such that the X-rays transmit through the first layer, the intermediate layer, and the second layer in this order, an amount of a specific element contained in one of the first layer and the second layer according to an intensity of the fluorescent X-rays having a predetermined first energy included in the detected fluorescent X-rays;
calculating, based on a result of detecting transmitted X-rays transmitted through the sample, a total amount of the specific element contained in the first layer and the second layer according to an intensity of the transmitted X-rays having a predetermined second energy higher than the first energy included in the detected transmitted X-rays; and
calculating an amount of the specific element contained in the other of the first layer and the second layer according to the amount of the specific element contained in the one of the first layer and the second layer and the total amount of the specific element contained in the first layer and the second layer.
